# FASCICULE DE BREVET EUROPEEN

(11) **EP 2 454 466 B1**
(45) Date de publication et mention de la délivrance du brevet: **03.07.2013**
(21) Numéro de dépôt: 10752035.5
(22) Date de dépôt: 16.07.2010
(51) Int. Cl.: F02K 9/64, F02K 9/97, F02K 9/50

(54) **Moteur-fusée à ergols cryotechniques**
Raketenmotor mit kryogenen Treibstoffen
Rocket engine with cryogenic propellants

(30) Priorité: 17.07.2009 FR 0954984
(43) Date de publication de la demande: 23.05.2012
(73) Titulaire: Snecma, 75015 Paris (FR)
(72) Inventeur: DOBEK, Olivier, F-78210 Saint Cyr l'Ecole (FR); LE DORTZ, Daniel, F-27200 Vernon (FR)
(74) Mandataire: Thévenet, Jean-Bruno
(86) Numéro de dépôt international: PCT/FR2010/051504
(87) Numéro de publication internationale: WO 2011/007108

(56) Documents cités:
- FR-A1- 2 782 378
- US-A- 3 220 180
- US-B2- 6 658 863

## Description

### Domaine de l'invention

La présente invention a pour objet un moteur-fusée à ergols cryotechniques comprenant au moins un premier réservoir pour un premier ergol liquide, un deuxième réservoir pour un deuxième ergol liquide, un troisième réservoir pour un fluide inerte et une tuyère de forme axisymétrique comprenant une chambre de combustion, un dispositif d'injection des premier et deuxième ergols liquides dans la chambre de combustion, un col de tuyère et un divergent.

### Art antérieur

On connaît déjà notamment par le document de brevet US 6 658 863 un système de stockage et de fourniture de gaz inerte sous pression, tel que de l'hélium, à bord d'un véhicule lanceur à moteur fusée, afin de mettre sous pression un ou plusieurs réservoirs de propergol pour fournir en continu du propergol au moteur-fusée et pour maintenir l'intégrité structurale des réservoirs. Un tel système connu met en oeuvre un échangeur de chaleur qui peut utiliser comme source de chaleur les gaz chauds issus du système de propulsion du lanceur. Il est également proposé d'utiliser un chauffage électrique à titre d'alternative. De telles solutions ne conviennent pas à tous les types de moteur-fusée et de divergent et sont en particulier mal adaptées pour récupérer l'énergie des moteurs-fusées fonctionnant selon un cycle de type expander ou mettant en oeuvre des divergents en matériau composite.

D'une manière générale, on utilise souvent dans l'industrie des échangeurs de chaleur qui utilisent pour réchauffer un fluide la puissance disponible d'une pièce matérielle qui est récupérée soit par conduction (contact entre deux pièces) soit par convection (contact entre un fluide chaud et une paroi).

### Définition et objet de l'invention

L'invention vise à remédier aux inconvénients précités de l'art antérieur et à permettre de récupérer de façon optimisée et simple de la chaleur disponible dans un moteur-fusée pour réchauffer un fluide inerte de pressurisation d'un ou plusieurs réservoirs d'ergol et ainsi réduire la masse embarquée dans le lanceur équipé du moteur-fusée.

Ces buts sont atteints, conformément à l'invention, grâce à un moteur-fusée à ergols cryotechniques selon la revendication 1.

La puissance radiative émise par un divergent de tuyère de moteur-fusée en matériau composite peut être supérieure à 250 kW par m² de divergent et il est ainsi possible de récupérer une énergie radiative importante pour réchauffer le fluide inerte (par exemple de l'hélium disponible à 20 k) et pressuriser ainsi un étage de lanceur pour obtenir un gain direct sur la charge utile (de l'ordre de plusieurs dizaines de kilogrammes), sans mettre nécessairement en oeuvre une récupération de l'énergie du moteur-fusée par conduction ou convection.

Selon un aspect de l'invention, le dispositif réchauffeur comprend une structure métallique dans laquelle circule le fluide inerte à réchauffer et une fine couche fortement absorptive d'un point de vue rayonnement thermique est déposée au moins sur les parois situées en vis-à-vis de la tuyère constituant une source de puissance radiative.

La plaque du dispositif réchauffeur peut présenter une épaisseur comprise entre environ 5 et 15 mm.

La plaque du dispositif réchauffeur comprend avantageusement un réseau de canaux continus de section rectangulaire ou circulaire.

Le fluide inerte est avantageusement de l'hélium qui peut servir de gaz de pressurisation par exemple pour un réservoir d'oxygène liquide. Dans ce cas, des canalisations de liaison sont disposées entre le dispositif réchauffeur et le réservoir d'oxygène liquide pour fournir à ce dernier de l'hélium de pressurisation.

La tuyère du moteur-fusée peut être réalisée de façons très diverses et peut par exemple comprendre un divergent déployable qui peut avantageusement être réalisé en matériau composite carbone-carbone.

### Brève description des dessins

D'autres caractéristiques et avantages de l'invention ressortiront de la description suivante de modes particuliers de réalisation, donnés à titre d'exemples, en référence aux dessins annexés, sur lesquels :
- la figure 1 est une vue schématique en coupe transversale d'une tuyère de moteur-fusée et d'un dispositif réchauffeur à plaque selon un mode de réalisation de l'invention,
- la figure 2 est une vue agrandie, d'une portion II du dispositif réchauffeur à plaque de la figure 1 ;
- la figure 3 est une vue schématique en perspective de la tuyère et du dispositif réchauffeur à plaque de la figure 1 ; et
- la figure 4 est une vue schématique d'ensemble d'un exemple de moteur-fusée auquel est applicable l'invention.

### Description détaillée de modes de réalisation préférentiels :

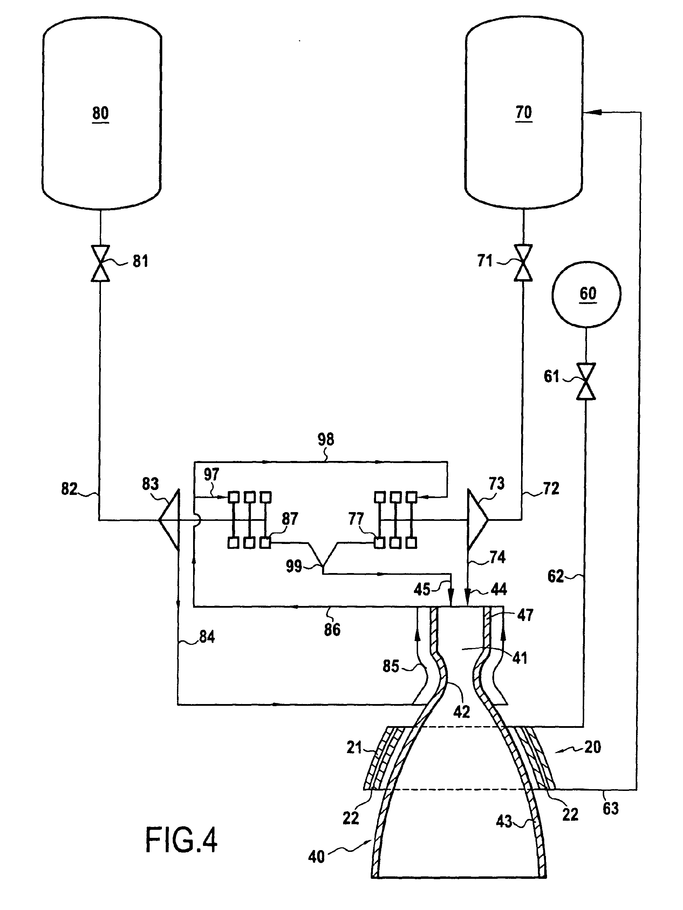

On décrira d'abord brièvement en référence à la figure 4 un exemple de moteur-fusée à cycle expander auquel est notamment applicable l'invention.

Un flux de combustible, tel que de l'hydrogène, stocké dans un réservoir 80, est pompé dans le réservoir à travers une canalisation 82 et une vanne 81 à l'aide d'une pompe 83 et conduit à travers une canalisation 84 vers la paroi 47 de la tuyère 40 pour circuler le long de celle-ci dans un réseau de tubes constituant un circuit régénératif 85 qui abaisse la température des parois 47 de la partie supérieure du divergent 43, du col de tuyère 42 et de la chambre de combustion 41 en réchauffant l'ergol combustible qui est évacué du circuit régénératif 85 par une canalisation 86. Des turbines 87, 77 faisant partie des turbo-pompes permettant le pompage de l'ergol combustible par la pompe 83 et le pompage de l'ergol comburant par la pompe 73 reçoivent par des canalisations 86, 97, 98 l'ergol qui est gazéifié par le circuit régénératif 85 et qui à la sortie des turbines 87, 77 est évacué par un conduit 99 vers la chambre de combustion 41. Tout le débit de l'ergol combustible circulant dans la canalisation 86, est injecté par l'injecteur 45 dans la chambre de combustion 41. L'ergol comburant pompé dans le réservoir d'ergol 70 est pompé à travers une canalisation 72 et une vanne 71 à l'aide de la pompe 73 et conduit à travers la canalisation 74 vers un injecteur 44 pour être injecté dans la chambre de combustion 41.

De manière classique, le circuit régénératif 85 peut être constitué par un réseau de tubes métalliques rapportés sur une coque constituant la paroi de la chambre de combustion et de tout ou partie de la tuyère du moteur-fusée.

L'invention n'est pas limitée à des tuyères incorporant le circuit régénératif 85 qui n'est donné qu'à titre d'exemple.

L'invention s'applique à tous les types de divergents 43, et peut s'appliquer par exemple à un moteur-fusée comprenant une nappe de tubes de refroidissement juxtaposés, soudés ou brasés, et constituant directement au moins une partie du divergent de la tuyère. Toutefois, l'invention s'applique de façon privilégiée à des divergents en matériau composite thermostructural, par exemple de type carbone-carbone, carbone-céramique ou céramique-céramique, ces divergents pouvant être ou non de type déployable.

L'invention peut aussi s'appliquer à un moteur-fusée fonctionnant avec un autre type de circuit de refroidissement, par exemple un circuit hydraulique auxiliaire distinct des flux principaux d'ergols d'alimentation du moteur.

Dans le cas d'un divergent 43 non refroidi et en matériau composite, lorsque le moteur-fusée est en fonctionnement, celui-ci émet un fort rayonnement thermique vers l'extérieur. La puissance émise par le divergent 43 est généralement supérieure à 250 kW par m² de divergent.

Conformément à l'invention, un dispositif réchauffeur 20 comprenant au moins un conduit parcouru par un fluide inerte est disposé à l'extérieur de la tuyère 40, à proximité immédiate de celle-ci, mais sans contact, pour récupérer l'énergie du rayonnement thermique émis lorsque le moteur-fusée est en fonctionnement et réchauffer ce fluide inerte, qui peut être par exemple de l'hélium.

Sur la figure 4, on voit un réservoir d'hélium 60 qui est relié par une conduite 62 et une vanne 61 au dispositif réchauffeur 20 et une conduite 63 qui relie le dispositif réchauffeur au réservoir 70 d'oxygène liquide pour fournir à ce dernier de l'hélium de pressurisation du réservoir 70.

Sur la figure 4, on a représenté un dispositif réchauffeur 20 avec une plaque en forme de secteur tronconique munie de canaux 22, mais divers modes de réalisation sont possibles pour cet échangeur de chaleur radiatif qui permet de récupérer de l'énergie radiative du moteur-fusée et ainsi de pressuriser un ou plusieurs réservoirs d'ergols en obtenant un gain de plusieurs dizaines de kilogrammes sur la charge utile par comparaison avec des systèmes de pressurisation d'hélium classiques n'utilisant pas d'échangeur de chaleur radiatif.

Le réchauffeur récupérant l'énergie radiative provenant d'un moteur-fusée est composé d'une structure métallique dans laquelle circule le fluide que l'on veut réchauffer. Ce réchauffeur est dimensionné en fonction de la puissance radiative disponible qu'il est capable d'absorber à son emplacement. A iso-géométrie, son pouvoir d'absorption dépend à la fois de ses propriétés absorptives et du facteur de vue global entre le réchauffeur et le moteur fusée. Pour cette raison, une fine couche, fortement absorptive d'un point de vue rayonnement thermique, est déposée sur les parois en vis-à-vis de la source de puissance radiative. La forte absorptivité du dépôt permet de ne pas réfléchir trop de flux incident provenant du moteur-fusée pour ne pas créer de point de surchauffe. Le fluide circulant dans l'échangeur se réchauffe par convection classique permettant par la même occasion de stabiliser la température des parois du réchauffeur.

L'environnement du réchauffeur est composé :
- du vide sidéral (température du vide sidéral à 3K)
- du moteur-fusée lui-même composé d'au moins une pièce, de forme axisymétrique, chaude en fonctionnement (T > 1 000 K).

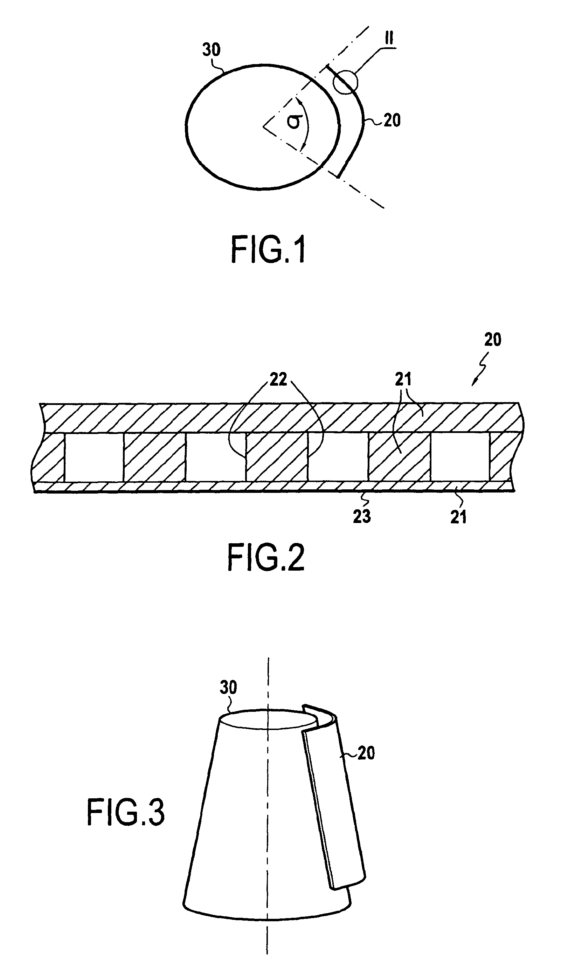

Selon un mode de réalisation avantageux, le dispositif réchauffeur 20 comprend une plaque métallique en forme de secteur tronconique qui s'étend autour du divergent de la tuyère (représenté schématiquement par un tronc de cône 30 sur les figures 1 et 3) sur un angle σ compris entre 30° et 360°.

Comme on peut le voir sur la figure 2, la plaque 21 du réchauffeur 20 comprend un réseau de canaux continus 22 de section rectangulaire ou circulaire. Une fine couche 23 de matériau fortement absorptif d'un point de vue rayonnement thermique est formée sur la paroi de la plaque 21 située en vis-à-vis de la source de puissance radiative 30.

La plaque 21 du réchauffeur 20 peut présenter une épaisseur comprise entre environ 5 et 15 mm.

## Revendications

1. Moteur-fusée à ergols cryotechniques comprenant au moins un premier réservoir (70) pour un premier ergol liquide, un deuxième réservoir (80) pour un deuxième ergol liquide, un troisième réservoir (60) pour un fluide inerte et une tuyère (40) de forme axisymétrique comprenant une chambre de combustion (41), un dispositif (44, 45) d'injection des premier et deuxième ergols liquides dans la chambre de combustion (41), un col de tuyère (42) et un divergent (43), et en outre un dispositif réchauffeur (20) comprenant au moins un conduit (22) de circulation dudit fluide inerte et disposé à l'extérieur de la tuyère (40) **caractérisé en ce que** ledit dispositif réchauffeur (20) est disposé à proximité immédiate de ladite tuyère (40) mais sans contact, pour récupérer l'énergie du rayonnement thermique émis lorsque le moteur-fusée est en fonctionnement et réchauffer ledit fluide inerte, le dispositif réchauffeur (20) comprenant une plaque (21) en forme de secteur tronconique qui s'étend autour du divergent (43) de la tuyère (40) sur un angle σ compris entre 30° et 360°.

2. Moteur-fusée selon la revendication 1, **caractérisé en ce que** le dispositif réchauffeur (20) comprend une structure métallique dans laquelle circule le fluide inerte à réchauffer et une fine couche (23) fortement absorptive d'un point de vue rayonnement thermique est déposée au moins sur les parois situées en vis-à-vis de la tuyère constituant une source de puissance radiative.

3. Moteur-fusée selon la revendication 1 ou la revendication 2, **caractérisé en ce que** ladite plaque (21) du dispositif réchauffeur (20) présente une épaisseur comprise entre 5 et 15 mm.

4. Moteur-fusée selon l'une quelconque des revendications 1 à 3, **caractérisé en ce que** ladite plaque (21) du dispositif réchauffeur (20) comprend un réseau de canaux continus (22) de section rectangulaire ou circulaire.

5. Moteur-fusée selon l'une quelconque des revendications 1 à 4, **caractérisé en ce que** le fluide inerte est de l'hélium.

6. Moteur-fusée selon l'une quelconque des revendications 1 à 5, **caractérisé en ce qu'**il comprend au moins un réservoir (70) d'oxygène liquide.

7. Moteur-fusée selon les revendications 5 et 6, **caractérisé en ce qu'**il comprend des canalisations de liaison entre le dispositif réchauffeur (20) et le réservoir (70) d'oxygène liquide pour fournir à ce dernier de l'hélium de pressurisation.

8. Moteur-fusée selon l'une quelconque des revendications 1 à 7, **caractérisé en ce que** la tuyère (40) comprend un divergent (43) déployable.

9. Moteur-fusée selon l'une quelconque des revendications 1 à 8, **caractérisé en ce qu'**il comprend un divergent en matériau composite thermostructural carbone-carbone, carbone-céramique ou céramique-céramique.

## Patentansprüche

1. Raketentriebwerk mit Kryotreibstoffen, umfassend wenigstens einen ersten Tank (70) für einen ersten flüssigen Treibstoff, einen zweiten Tank (80) für einen zweiten flüssigen Treibstoff, einen dritten Tank (60) für ein inertes Fluid sowie eine Düse (40) mit axialsymmetrischer Form, die eine Brennkammer (41), eine Vorrichtung (44, 45) zum Einspritzen des ersten und des zweiten flüssigen Treibstoffs in die Brennkammer (41), einen Düsenhals (42) und einen divergenten Düsenteil (43) umfaßt, sowie ferner eine Aufwärmvorrichtung (20), die wenigstens eine Leitung (22) für die Zirkulation des inerten Fluids umfaßt und die außerhalb der Düse (40) angeordnet ist, **dadurch gekennzeichnet, daß** die Aufwärmvorrichtung (20) in unmittelbarer Nähe der Düse (40), jedoch ohne Kontakt angeordnet ist, um die Energie der Wärmestrahlung, die ausgesandt wird, wenn das Raketentriebwerk in Betrieb ist, aufzufangen und um das inerte Fluid aufzuwärmen, wobei die Aufwärmvorrichtung (20) eine kegelstumpfsektorförmige Platte (21) umfaßt, die sich über einen Winkel σ zwischen 30° und 360° um den divergenten Teil (43) der Düse (40) erstreckt.

2. Raketentriebwerk nach Anspruch 1, **dadurch gekennzeichnet, daß** die Aufwärmvorrichtung (20) eine Metallstruktur umfaßt, in der das aufzuwärmende inerte Fluid zirkuliert, und eine unter einem Gesichtspunkt der Wärmestrahlung stark absorptionsfähige dünne Schicht (23) wenigstens auf den Wänden aufgebracht ist, die der eine Strahlungsleistungsquelle bildenden Düse gegenüberliegen

3. Raketentriebwerk nach Anspruch 1 oder Anspruch 2, **dadurch gekennzeichnet, daß** die Platte (21) der Aufwärmvorrichtung (20) eine Dicke zwischen 5 und 15 mm aufweist.

4. Raketentriebwerk nach einem der Ansprüche 1 bis 3, **dadurch gekennzeichnet, daß** die Platte (21) der Aufwärmvorrichtung (20) ein Netz aus durchgehenden Kanälen (22) mit rechteckigem oder kreisförmigem Querschnitt umfaßt.

5. Raketentriebwerk nach einem der Ansprüche 1 bis 4, **dadurch gekennzeichnet, daß** das inerte Fluid Helium ist.

6. Raketentriebwerk nach einem der Arisprüche 1 bis 5, **dadurch gekennzeichnet, daß** es wenigstens einen Flüssigsauerstoff-Tank (70) umfaßt.

7. Raketentriebwerk nach den Ansprüchen 5 und 6, **dadurch gekennzeichnet, daß** es Verbindungsrohrleitungen zwischen der Aufwärmvorrichtung (20) und dem Flüssigsauerstoff-Tank (70) umfaßt, um letzterem Helium zur Druckbeaufschlagung bereitzustellen.

8. Raketentriebwerk nach einem der Ansprüche 1 bis 7, **dadurch gekennzeichnet, daß** die Düse (40) einen ausfahrbaren divergenten Düsenteil (43) umfaßt

9. Raketentriebwerk nach einem der Ansprüche 1 bis 8, **dadurch gekennzeichnet, daß** es einen divergenten Düsenteil aus hochtemperaturbeständigem Kohlenstoff-Kohlenstoff-, Kohlenstoff-Keramik- oder Keramik-Keramik-Verbundwerkstoff umfaßt.

## Claims

1. A cryogenic-propellant rocket engine having at least a first tank (70) for a first liquid propellant, a second tank (80) for a second liquid propellant, a third tank (60) for an inert fluid, and an axisymmetrical nozzle (40) comprising a combustion chamber (41), a device (44, 45) for injecting first and second liquid propellants into the combustion chamber (41), a nozzle throat (42), and a divergent section (43), and further a heater device (20) including at least one duct (22) for conveying said inert fluid and arranged outside the nozzle (40), **characterized in that** said heater device (20) is located in the immediate proximity of said nozzle (40), but without making contact therewith, in order to recover the energy of the thermal radiation emitted when the rocket engine is in operation and in order to heat said inert fluid, the heater device (20) comprising a plate (21) in the form of a frustoconical sector that extends around the divergent section (43) of the nozzle (40) over an angle σ lying in the range 30° to 360°.

2. A rocket engine according to claim 1, **characterized in that** the heater device (20) comprises a metal structure in which the inert fluid for heating flows and a fine layer (23) that is strongly absorbent from a thermal radiation point of view is deposited at least on the walls that face the nozzle constituting a radiant power source.

3. A rocket engine according to claim 1 or claim 2, **characterized in that** said plate (21) of the heater device (20) presents thickness lying in the range 5 mm to 15 mm.

4. A rocket engine according to any one of claims 1 to 3, **characterized in that** said plate (21) of the heater device (20) includes a network of continuous channels (22) of rectangular or circular section.

5. A rocket engine according to any one of claims 1 to 4, **characterized in that** the inert fluid is helium.

6. A rocket engine according to any one of claims 1 to 5, **characterized in that** it includes at least one tank (70) of liquid oxygen.

7. A rocket engine according to claims 5 and 6, **characterized in that** it includes pipes making a connection between the heater device (20) and the liquid oxygen tank (70) in order to supply it with pressurizing helium.

8. A rocket engine according to any one of claims 1 to 7, **characterized in that** the nozzle (40) includes a divergent section (43) that is expandable.

9. A rocket engine according to any one of claims 1 to 8, **characterized in that** it includes a divergent section made of thermostructural carbon-carbon, carbon-ceramic, or ceramic-ceramic composite material.
